# EUROPÄISCHE PATENTSCHRIFT

(11) **EP 0 219 072 B1**
(45) Veröffentlichungstag und Bekanntmachung des Hinweises auf die Patenterteilung: **19.01.1994**
(21) Anmeldenummer: 86114045.7
(22) Anmeldetag: 10.10.1986
(51) Int. Cl.: H02G 15/013

(54) **Dichtungskörper für Kabelgarnituren aus thermoplastischem Kunststoff**
Sealing body for cable fittings of thermoplastic synthetic material
Corps d'étanchéité pour garnitures de câble en matière synthétique thermoplastique

(30) Priorität: 14.10.1985 DE 3536597
(43) Veröffentlichungstag der Anmeldung: 22.04.1987
(73) Patentinhaber: SIEMENS AKTIENGESELLSCHAFT, 80333 München (DE)
(72) Erfinder: Bachel, Ernst, D-8085 Geltendorf (DE); Pichler, Klaus, D-8186 Otterfing (DE); Giebel, Wolfgang, D-8033 Planegg (DE)

(56) Entgegenhaltungen:
- EP-A- 0 002 789
- WO-A-81/01487
- DE-A- 2 615 314
- DE-A- 2 632 852

## Beschreibung

Die Erfindung betrifft einen Dichtungskörper für Kabelgarnituren aus thermoplastischem Kunststoff, der in Einführungsrichtung Abdichtungselemente für einzuführende Kabel aufweist, wobei die Kabeleinführungsöffnungen den Durchmessern der Kabel anpaßbar sind und der Dichtungskörper eine Führung und eine Klemmvorrichtung für eine auf den gesamten Umfang des eingeführten Kabels wirkende, im Dichtungskörper integrierte Abfangvorrichtung aufweist, die aus parallel zu den Abdichtungselementen liegenden, den Durchmessern der eingeführten Kabel angepaßten und senkrecht zur Einführungsachse in der Führung in Richtung der Kabel preßbaren Scheiben besteht.

Aus der DE-PS 24 27 677 sind Dichtungskörper aus Kunststoff mit in Kabeleinführungsrichtung hintereinander liegenden, lamellenartigen Abdichtungselementen für längsgeteilte Kabelgarnituren und mit Einlagen aus plastischer Dichtungsmasse bekannt. Die lamellenartigen Abdichtungselemente werden durch Ausschneiden mit entsprechenden Hilfseinrichtungen den Durchmessern der einzuführenden Kabel angepaßt. Diese an den Stirnseiten der Kabelmuffe einzusetzenden Dichtungskörper werden mittels Verbindungsschienen zug- und drucksicher miteinander verbunden. Die Abfangung der Kabel erfolgt jedoch bei diesen Ausführungsformen unabhängig von den Dichtungskörpern, so daß zusätzliche davon unabhängige Abfangelemente eingesetzt werden müssen.

Aus der WO-A-810 14 87 ist eine Kabelmuffe bekannt, die an den Stirnseiten fest angeformte Dichtungsbereiche aufweist, wobei diese aus hintereinander liegenden Lamellen bestehen. In den Zwischenräumen zwischen den Lamellen sind Scheiben einfügbar, die beim Schließen der Kabelmuffe auf die Kabel preßbar sind, wobei eine genaue Abstimmung zwischen den Einführungsöffnungen der Scheiben und den Durchmesseren der Kabel eingehalten werden muß. Die Einwirkungen der Scheiben auf die Kabel sind somit durch die Kabelmuffe selbst bestimmt, da die Dimensionierung der Klemmmittel für die gesamte Muffe bestimmend ist.

Auch aus der DE-A-26 15 314 ist eine Kabelmuffe mit fest angeformten Dichtungsbereichen aus hintereinander liegenden Lamellen bekannt und auch hier wirken die zum Schließen der Kabelmuffe bestimmten Klemmittel auf der Außenseite der Kabelmuffe ein, so daß ein direkter Einfluß auf Scheiben, die als Kabelhalterungen dienen, nicht gegeben ist, wobei diese Scheiben offensichtlich der Begrenzung der plastischen Dichtungsmasse dienen.

Aufgabe vorliegender Erfindung ist nun, einen Dichtungskörper für Kabelgarnituren mit Muffenrohren zu schaffen, bei dem neben den Dichtungselementen auch die Abfangelemente für die eingeführten Kabel integriert sind, wobei die Abdichtung zum Kabel unabhängig vom umgebenden Muffenrohr und gegebenenfalls unabhängig von den Abfangelementen erfolgen kann. Die gestellte Aufgabe wird nun mit Hilfe eines Dichtungskörpers der eingangs geschilderten Art dadurch gelöst, daß der Dichtungskörper aus zwei Dichtungskörperhälften zusammengesetzt ist, daß nach dessen Montage ein separates Muffenrohr aufgezogen ist, daß die Scheiben durch die Klemmvorrichtungen eingepreßt sind, daß die Klemmvorrichtung aus Druckbügeln besteht, die mittels Schraubelementen gegen aus der Führung herausragende Überstände der beweglichen Scheiben gepreßt werden.

Vorteile der Erfindung sind nun darin zu sehen, daß im Dichtungskörper neben dem Abdichtungsbereich auch die Abfangvorrichtung für die eingeführten Kabel angeordnet ist, wobei infolge des vom Muffenrohr getrennten Dichtungskörpers die einzelnen Funktionen getrennt voneineinander einstellbar sind. Darüber hinaus ist vorteilhaft, daß nun mit dieser Abfangvorrichtung alle eingeführten Kabel gleichzeitig erfaßt werden, was bisher nicht möglich war; denn jedes Kabel mußte mit eigenen Mitteln abgefangen werden. Neben der vereinfachten Bauweise sind also auch die Montagearbeiten gegenüber dem Stand der Technik erheblich verbessert, wobei die geforderten Richtlinien voll eingehalten werden können. Ferner ist erwähnenswert, daß durch entsprechende Dimensionierung die Druckelemente für die Kabelabfangung eine Verletzung der Kabelseele durch unzulässige Pressung praktisch ausgeschlossen werden kann.

Die Erfindung wird nun anhand von vier Figuren näher erläutert.
- Figur 1: zeigt das Prinzip des erfindungsgemäßen Dichtungskörpers, in dem Dichtung und Abfangung vereint sind.
- Figur 2: zeigt ein Ausführungsbeispiel in einer Ansicht vom Inneren der Kabelmuffe heraus gegen den stirnseitigen Dichtungskörper.
- Figur 3: zeigt eine Seitenansicht dieses Dichtungskörpers bei offenem Muffenrohr.
- Figur 4: verdeutlicht die Verschraubung der Klemmvorrichtung für die Kabelabfangung.

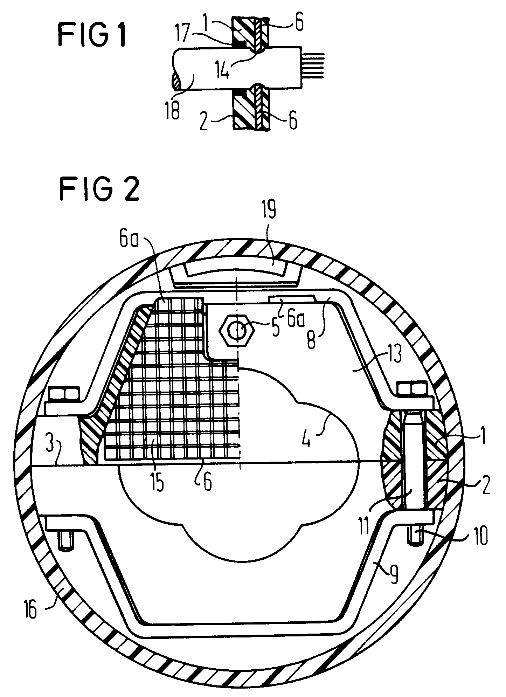

In der Figur 1 ist in einfacher Weise das Prinzip der im Dichtungskörper integrierten Kabelabfangung gemäß der Erfindung skizziert. Dort ist angedeutet, daß der aus zwei Teilen bestehende Dichtungskörper 1-2 in einem ersten Bereich durch die Einlage von entsprechendem Dichtungsmaterial 17 für die Abdichtung des eingeführten Kabels 18 herangezogen wird. In einem zweiten Bereich 14 erfolgt durch eingeschobene Scheiben 6 die Kabelabfangung, wobei in diesem Bereich eine noch zulässige Einschnürung des Kabels infolge der durch Klemmvorrichtungen eingepreßten Scheiben 6 erfolgt. Damit ist deutlich, daß die Abdichtung und Abfangung der Kabel im Dichtungskörper 1-2 zusammengefaßt sind. Die Einzelheiten hierüber werden in den folgenden Figuren näher erläutert.

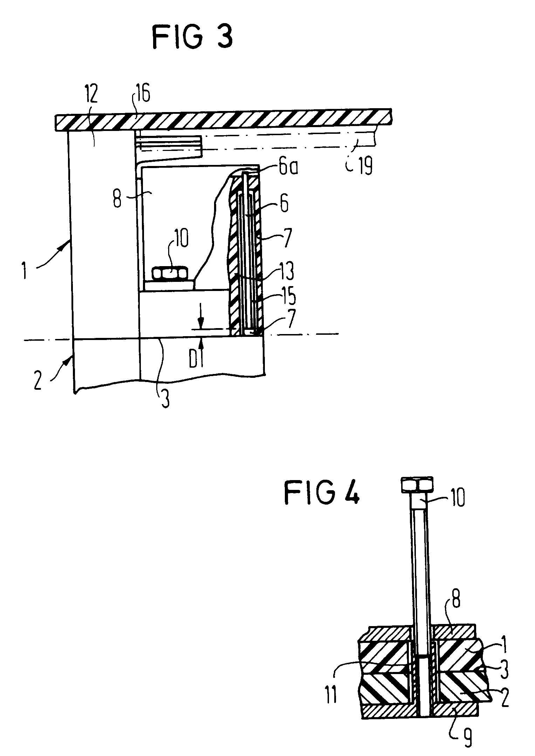

Die Figur 2 zeigt die Einzelheiten der im Dichtungskörper 1-2 integrierten Kabelabfangvorrichtung, die im Innenteil 13 des Dichtungskörpers 1-2 eingesetzt ist. Dieser Einsatz geht aus der später zu erläuternden Figur 3 besser hervor. In dieser Figur ist auch auf der Stirnfläche des Dichtungskörpers 1-2 der Bereich 4 kenntlich gemacht, in dem die Kabel der verschiedensten Durchmesser und Anzahl eingeführt werden. Dies ist auch der Bereich, in dem die integrierte Kabelabfangvorrichtung voll über alle Kabel hinweg wirksam sein muß. Im Dichtungsbereich des Dichtungskörpers 1-2 sind nun in Achsrichtung hintereinander liegende lamellenartige Abdichtungselemente angeordnet die entsprechend den Durchmessern und der Anzahl der einzuführenden Kabel ausgeschnitten bzw. aufgebohrt werden. Dies ist an sich bekannt. Für die neue Kabelabfangung hingegen ist nun ein ähnliches lamellenartiges Element als Scheibe 6 eingesetzt, doch ist diese Scheibe 6 seiner Aufgabe entsprechend mechanisch stärker ausgebildet, wird jedoch ebenfalls beim Aufbohrvorgang für die Kabeleinführungen mit aufgebohrt, so daß sich auch hierfür keine zusätzlichen Arbeitsgänge ergeben. Weiterhin sind diese Scheiben 6 anders als die Abdichtungselemente senkrecht zur Achsrichtung des Dichtungskörpers 1-2 verschiebbar in einer Führung des Dichtungskörpers 1-2 angeordnet. Diese Führung ist im gezeigten Ausführungsbeispiel als Schlitz 7 ausgebildet, kann jedoch auch in anderer Weise erfolgen. Damit sind also die Voraussetzungen für das lagegerechte Umschließen der einzelnen eingeführten Kabel geschaffen; denn beim Zusammensetzen der Dichtungskörperhälften 1 und 2 ergeben sich die kreisförmigen Ausschnitte, in denen die Kabel geführt sind. Die Scheiben 6 sind allerdings beim Aufbohrvorgang nicht voll bis zur Teilungsebene 3 des Dichtungskörpers 1-2 eingeschoben, so daß die geschnittenen Öffnungen in den Scheiben 6 etwas kleiner sind als die Öffnungen in den fest angeordneten, lamellenartigen Abdichtungselementen. Dadurch wird erreicht, daß die Scheiben 6 beim Niederdrücken mit Hilfe der hierfür vorgesehenen Klemmvorrichtungen 8-9 den Kabelmantel aufgrund der verengten Öffnungen einpressen und ihn sogar bis zu einem zulässigen Maß einschnüren. Außerdem ist dabei noch zu berücksichtigen, daß in diesem Abfangbereich keine Abdichtungsmasse für die Abdichtung der Trennebene eingelegt ist, so daß die Scheiben mit ihren verengten Öffnungen direkt auf den Kabelmantel einwirken. Die Scheiben 6 besitzen nun vorzugsweise noch eine gerippte oder gitterförmige Oberflächenstruktur 15, wodurch bewirkt wird, daß sich die geschnittenen Kanten in den Öffnungen besser in den Kabelmantel eindrücken lassen. Durch die entstandene Querstruktur in der zum Kabelmantel gerichteten Auflageflächen der Scheiben 6 ergibt sich außerdem noch ein Schutz gegen Torsionskräfte. Die Scheiben 6 sind in ihrer Größe so dimensioniert, daß sie auf jeden Fall den vollen Einführungsbereich 4 für die Kabel erfassen und weiterhin aus dem Dichtunskörperinnenteil 13 im Erfassungsbereich der hierfür vorgesehnen Klemmmvorrichtungen 8-9 mit Überständen 6a so weit überragen, daß genügender Abfangdruck auf die Kabel erzeugt werden kann. Andererseits kann durch geschickte Dimensionierung und entsprechenden Anschlägen auch dafür gesorgt werden, daß der Abfangdruck auf die Kabel den zulässigen Wert nicht übersteigt, so daß hierdurch die Kabelseele gegen Verletzung geschützt werden kann. Der Abfangdruck wird nun in diesem Ausführungsbeispiel mit Hilfe von U-förmigen Druckbügeln 8 und 9 erzielt, die über dem Innenteil 13 jedes Dichtungskörperteiles 1 bzw. 2 zum Beispiel unverlierbar angebracht sind. Diese Druckbügel 8 und 9 werden nach der Montage der Dichtungskörperteile 1 und 2 durch Schraubmittel 10, die über die Trennungslinie 3 hinwegreichen, zusammengepreßt, wobei durch Einwirkung der beiden Druckbügel 8 und 9 auf die Überstände 6a der Scheiben 6 in beiden Dichtungskörperhälften 1 und 2 der Abfangdruck auf die eingeführten Kabel erzeugt wird.

Zur Übertragung der abgefangenen Kräfte sind wie bisher üblich an den stirnseitigen Dichtungskörpern 1-2 den Spleiß überbrückend Schienen 19 angeordnet. Im Dichtungskörper 1-2 ist weiterhin eine Durchführungsöffnung 5 zum Beispiel für Erdpotential vorgesehen, die bei der Gestaltung der Scheiben 6 für die Kabelabfangvorrichtung berücksichtigt werden müssen, wie aus der Figur hervorgeht. Weiterhin ist aus der Figur zu entnehmen, daß der montierte Dichtungskörper 1-2 von einem Muffenrohr 16 umgeben ist, das mit Hilfe eines hier nicht gezeigten Längsverschlusses aufgezogen wird.

Die Figur 3 zeigt in einem Teilausschnitt die axiale Position der im Dichtungskörper 1-2 integrierten Kabelabfangvorrichtung gemäß der Erfindung. Die Abfangvorrichtung ist in diesem Ausführungsbeispiel am Ende des Innenteils 13 des Dichtungskörpers 1-2 eingeführt, jedoch ist diese Lage nicht die einzig mögliche. Im aufgebrochenen Teil des Dichtungskörperinnenteils 13 wird die schlitzförmige Führung 7 sichtbar, in der senkrecht zur Trennlinie 3 des Dichtungskörpers 1-2 die Scheiben 6 für die Erzeugung des Abfangdruckes auf die Kabel eingeführt ist. Dabei wird weiterhin deutlich, daß die eingeführte Scheibe 6 im Bereich der Trennlinie 3 nur bis auf einen Abstand D herangeführt ist, der in etwa der Dicke des im Dichtungsbereich eingelegten Dichtungsmaterials entspricht. Außerdem wird auf diese Weise bei der Herstellung der Einführungsöffnungen ein für die Pressung erforderlicher geringerer Durchmesser als bei den Dichtungselementen ausgeschnitten, wie vorher bereits näher erläutert wurde. Am oberen Ende des Dichtungskörperinnenteils 13 steht dagegen die Scheibe 6 mit einem Überstand 6a über. Auf diesen Überstand 6a wirkt nun der Druckbügel 8 ein, der mit Hilfe der Schraubelemente 10 niedergedrückt wird. Auf diese Weise wird die Scheibe 6 in Richtung der Trennungsebene 3 bewegt, wo sie auf alle eingeführten Kabeln den erforderlichen Abfangdruck erzeugt. Weiterhin ist skizzenhaft der Dichtungsbereich 12 zwischen dem Dichtungskörper 1-2 und dem umgebenden Muffenrohr 16 wie auch die Verbindungsschiene 19 zur Überbrückung der Zug- bzw. Druckkräfte zwischen den beiden Dichtungskörpern 1-2 angedeutet.

Die Figur 4 verdeutlicht schließlich die zur Erzeugung des benötigten Druckes erforderliche Schließvorrichtung mit Hilfe der Schraubmittel 10. So ist jeweils der obere Druckbügel 8 mit einer Schraube 10 versehen, die vorzugsweise unverlierbar angeordnet ist, während der unten liegende Druckbügel 9 mit einer Gewindehülse 11 versehen ist, die in die Bohrungen der Dichtungskörperhälften 1 und 2 hineinragt. Diese Gewindehülse 11 ist vorzugsweise ebenfalls unverlierbar am Druckbügel 9 befestigt. Außerdem überragt sie die Trennungslinie 3 der beiden Dichtungskörperhälften 1 und 2. Auf diese Weise wird gewährleistet, daß beim Belegen der Trennungslinie 3 mit Dichtungsmasse die Bohrung bzw. das Gewinde freibleibt. Zusätzlich kann mit Hilfe dieser Verschlußhülsen 11 bei der Montage der beiden Dichtungskörperhälften 1 und 2 eine erste Zentrierung vorgenommen werden.

Die Platten 6 für die Kabelabfangrichtung sind auch dann anwendbar, wenn die Kabeleinführungsöffnungen nicht ausgeschnitten werden, das heißt wenn feste Kabeleinführungsöffnungen im Dichtungsbereich vorgesehen sind. Bei solchen Anwendungsfällen können im Bereich der Kabelabfangung gemäß der Erfindung Scheiben eingesetzt werden, die bereits ebenfalls vorgefertigte Kabeleinführungsöffnungen aufweisen. Es ist dann zweckmäßig, für verschiedene Verwendungsfälle einen gewissen Satz mit entsprechenden Durchmesserabstufungen bereitzuhalten. In der Wirkungsweise ändert sich gegenüber dem vorher beschriebenen Ausführungsbeispiel nichts, so daß auch hier die der Erfindung zugrunde liegende Aufgabe erfüllt ist.

Das Verschließen bzw. Zusammensetzen der Dichtungskörperhälften 1 und 2 muß nicht unbedingt gleichzeitig mit dem Einpressen der Platten für die Abfangvorrichtung erfolgen, denn die beiden Vorgänge sind nicht voneinander abhängig. So kann es auch vorteilhaft sein, zunächst die Dichtungskörperhälften zusammenzusetzen und anschließend erst durch Aufpressen der Druckbügel die Kabelabfangung zu betätigen.

Als Werkstoff für die Scheiben der Abfangvorrichtung kommt jeder herkömmliche thermoplastische Kunststoff in Frage, der genügend Härte für die Übertragung des Abfangdruckes aufweist. Zur Kraftbegrenzung kann auch ein entsprechend harter Elastomer eingesetzt werden, der selbst nachgibt, wenn der zulässige Druck überschritten wird.

### Bezugszeichenliste

- 1: erster Dichtungskörperhälfte
- 2: zweite Dichtungskörperhälfte
- 3: Teilungsebene
- 4: Einführungsbereich
- 5: Durchführungsöffnung
- 6: Scheibe
- 6a: Überstand
- 7: Schlitzförmige Führung
- 8: Druckbügel
- 9: Druckbügel
- 10: Schraubelement
- 11: Gewindehülse
- 12: Dichtungsbereich
- 13: Dichtungskörperinnenteil
- 14: Dichtungsbereich
- 15: gitterförmige Struktur
- 16: Muffenrohr
- 17: Dichtungsmaterial
- 18: Kabel
- 19: Verbindungsschiene

## Patentansprüche

1. Dichtungskörper (1-2) für Kabelgarnituren aus thermoplastischem Kunststoff, der in Einführungsrichtung Abdichtungselemente (13) für einzuführende Kabel (18) aufweist, wobei die Kabeleinführungsöffnungen den Durchmessern der Kabel (18) anpaßbar sind, und der Dichtungskörper (1-2) eine Führung (7) und eine Klemmvorrichtung (8-9) für eine auf den gesamten Umfang des eingeführten Kabels (18) wirkende, im Dichtungskörper (1-2) integrierte Abfangvorrichtung aufweist, die aus parallel zu den Abdichtungselementen (13) liegenden, den Durchmessern der eingeführten Kabel (18) angepaßten und senkrecht zur Einführungsachse in der Führung (7) in Richtung der Kabel (18) preßbaren Scheiben (6) besteht,
**dadurch gekennzeichnet,**
daß der Dichtungskörper (1 - 2) aus zwei Dichtungskörperhälften (1, 2) zusammengesetzt ist, daß nach dessen Montage ein separates Muffenrohr (16) aufgezogen ist, daß die Scheiben (6) durch die Klemmvorrichtungen (8-9) eingepreßt sind, daß die Klemmvorrichtung (8-9) aus Druckbügeln (8, 9) besteht, die mittels Schraubelemente (10, 11) gegen aus der Führung (7) herausragende Überstände (6a) der beweglichen Scheiben (6) gepreßt werden.

2. Dichtungskörper nach Anspruch 1,
**dadurch gekennzeichnet,**
daß die Scheiben (6) zusammen mit den Abdichtungselementen (13) durch Ausschneiden bzw. Aufbohren den Durchmessern der einzuführenden Kabel anpaßbar sind.

3. Dichtungskörper nach einem der Ansprüche 1 bis 3,
**dadurch gekennzeichnet,**
daß die Scheiben (6) auswechselbar sind und jeweils vorgegebene Durchmesserausschnitte aufweisen.

4. Dichtungskörper nach einem der vorhergehenden Ansprüche,
**dadurch gekennzeichnet,**
daß die Seitenflächen der Scheiben (6) eine Oberflächenstruktur (15), insbesondere eine gitterförmige, aufweisen.

5. Dichtungskörper nach einem der vorhergehenden Ansprüche,
**dadurch gekennzeichnet,**
daß die Druckbügel (8,9) unverlierbare Schraubelemente (10,11) aufweisen und vorzugsweise an jeder Hälfte des Dichtungskörpers (1-2) unverlierbar angeordnet sind.

6. Dichtungskörper nach Anspruch 5,
**dadurch gekennzeichnet,**
daß an dem einen Druckbügel (8) Schraubbolzen (10) und an dem zweiten Druckbügel (9) vorzugsweise über die Teilungslinie (3) des Dichtungskörpers (1-2) hinausragende Hülsenmuttern (11) angeordnet sind.

7. Dichtungskörper nach einem der vorhergehenden Ansprüche,
**dadurch gekennzeichnet,**
daß die Scheiben (6) zunächst beim Aufbohrvorgang von der Teilungslinie (3) in einem der Dicke des einzulegenden Dichtungsmaterials entsprechenden Abstand (D) angeordnet sind.

8. Dichtungskörper nach einem der vorhergehenden Ansprüche,
**dadurch gekennzeichnet,**
daß die Führung (7) im Dichtungskörper (1-2) als Schlitz ausgebildet ist.

## Claims

1. Sealing body (1-2) for cable fittings of thermoplastic material, which has in the direction of insertion sealing elements (13) for cables (18) to be inserted, the cable insertion openings being adaptable to the diameters of the cables (18), and the sealing body (1-2) having a guide (7) and a clamping device (8, 9) for a gripping device which acts on the entire circumference of the inserted cable (18), is integrated in the sealing body (1-2) and comprises disks (6) which lie parallel to the sealing elements (13), are adapted to the diameters of the inserted cables (18) and can be pressed perpendicularly to the axis of insertion in the guide (7) in the direction of the cables (18), characterized in that the sealing body (1-2) is composed of two sealing body halves (1, 2), in that after their assembly a separate sleeve tube (16) is drawn on, in that the disks (6) are pressed in by the clamping devices (8-9) and in that the clamping device (8-9) comprises pressure clips (8, 9) which are pressed by means of screwing elements (10, 11) against projections (6a) of the movable disks (6) protruding from the guide (7).

2. Sealing body according to Claim 1, characterized in that the disks (6), together with the sealing elements (13), are adaptable by cutting out or drilling open to the diameters of the cables to be inserted.

3. Sealing body according to one of Claims 1 to 3, characterized in that the disks (6) are interchangeable and in each case have predetermined diameter cutouts.

4. Sealing body according to one of the preceding claims, characterized in that the side faces of the disks (6) have a surface structure (15), in particular a grid-shaped surface structure.

5. Sealing body according to one of the preceding claims, characterized in that the pressure clips (8, 9) have captive screwing elements (10, 11) and are preferably arranged captively on each half of the sealing body (1-2).

6. Sealing body according to Claim 5, characterized in that on the one pressure clip (8) there are arranged screw bolts (10) and on the second pressure clip (9) there are arranged sleeve nuts (11), preferably protruding beyond the parting line (3) of the sealing body (1-2).

7. Sealing body according to one of the preceding claims, characterized in that the disks (6) are initially arranged in the drilling-open operation at a distance (D) from the parting line (3) corresponding to the thickness of the sealing material to be introduced.

8. Sealing body according to one of the preceding claims, characterized in that the guide (7) in the sealing body (1-2) is designed as a slot.

## Revendications

1. Corps d'étanchéité (1-2) pour des garnitures de câbles en une matière plastique thermoplastique, comportant, dans la direction d'introduction, des éléments d'étanchéité (13) pour des câbles (18) devant être introduits, et dans lequel les ouvertures d'entrée des câbles peuvent être adaptées aux diamètres des câbles (18), et le corps d'étanchéité (1-2) comporte un guide (7) et un dispositif de serrage (8-9) pour un dispositif de captage qui agit sur toute la périphérie du câble introduit (18) et est intégré au corps d'étanchéité (1-2) et qui est constitué par des disques (6) qui sont disposés parallèlement aux éléments d'étanchéité (13), qui sont adaptés aux diamètres des câbles introduits (18) et qui sont comprimés dans la direction des câbles (18) perpendiculairement à l'axe d'introduction dans le guide (17), caractérisé par le fait que le corps d'étanchéité (1-2) est formé par la réunion de deux moitiés (1,2), qu'un tube séparé formant manchon (16) est emmanché après le montage du corps, que les disques (6) sont serrés au moyen des dispositifs de serrage (8-9), que le dispositif de serrage (8-9) est constitué par des étriers de serrage (8,9), qui sont serrés au moyen d'éléments vissables (10,11), contre des parties saillantes (6e), qui font saillie hors du guide (7), des disques mobiles (6).

2. Corps d'étanchéité suivant la revendication 1, caractérisé par le fait que les disques (6) peuvent être adaptés conjointement avec les élémentsd'étanchéité (13), par découpage ou perçage, aux diamètres des câbles devant être introduits.

3. Corps d'étanchéité suivant l'une des revendications 1 à 3, caractérisé par le fait que les disques (6) sont interchangeables et possèdent respectivement des sections de diamètre prédéterminé.

4. Corps d'étanchéité suivant l'une des revendications précédentes, caractérisé par le fait que les surfaces latérales des disques (6) possèdent une structure superficielle (15), notamment une structure superficielle en forme de grille.

5. Corps d'étanchéité suivant l'une des revendications précédentes, caractérisé par le fait que les étriers de serrage (8,9) possèdent des éléments vissables imperdables (10,11) et sont montés de préférence d'une manière imperdable sur chaque moitié du corps d'étanchéité (1-2).

6. Corps d'étanchéité suivant la revendication 5, caractérisé par le fait que des boulons (10) sont disposés sur un étrier de serrage (8) et des écrous-douilles (11) qui font saillie de préférence au-delà de la ligne de division (3) du corps d'étanchéité (1-2) sont disposées sur le second étrier de serrage (9).

7. Corps d'étanchéité suivant l'une des revendications précédentes, caractérisé par le fait que les disques (6) sont disposés tout d'abord, lors de l'opération de perçage, à une distance (D) de la ligne de séparation (3), qui correspond à l'épaisseur du matériau d'étanchéité devant être inséré.

8. Corps d'étanchéité suivant l'une des revendications précédentes, caractérisé par le fait que le guide (7) est réalisé sous la forme d'une fente dans le corps d'étanchéité (1-2).
